Europäisches Patentamt

European Patent Office

Office européen des brevets

(19)

(11) Veröffentlichungsnummer: **0 184 743**
**A2**

# (12) EUROPÄISCHE PATENTANMELDUNG

(21) Anmeldenummer: **85115229.8**

(22) Anmeldetag: **30.11.85**

(51) Int. Cl.⁴: **F 16 L 21/06**

(30) Priorität: **12.12.84 DE 3445268**

(43) Veröffentlichungstag der Anmeldung: **18.06.86**
**Patentblatt 86/25**

(84) Benannte Vertragsstaaten: **AT BE CH DE FR GB IT LI NL SE**

(71) Anmelder: **MENGERING Sanitär-Haustechnik GmbH, Winterhäuser Strasse 22, D-8700 Würzburg (DE)**

(72) Erfinder: **Klingelhöfer, Ulrich, Neubaustrasse 7, D-8702 Waldbüttelbrunn (DE)**

(54) Vorrichtung zum abgedichteten Verbinden der glattzylindrischen Enden zweier Rohre.

(57) Zur baulichen Vereinfachung und um jegliche Wärmebehandlung des Schellenbandes 11 durch Schweißvorgänge zu vermeiden, sind die Enden des Schellenbandes 11 gegen dieses zurück und in mehr als einer Lage um jeweils einen Stegbolzen 13 herumgewickelt. Dabei sind die Endabschnitte 15 des Schellenbandes 11 parallel zur Hauptachse 14 der Verbindungsvorrichtung radial nach innen abgebogen und in einem Längsschlitz 16 in jedem Stegbolzen 13 verankert. Die Spannschraube 17 erstreckt sich durch eine Durchgangsbohrung 18 in einen Stegbolzen 13 und in eine Gewindebohrung 19 des anderen Stegbolzens 13.

Mengering Sanitär-Haustechnik
GmbH, 8700 Würzburg

0184743
HT-76-DE
4.12.1984

## Vorrichtung zum abgedichteten Verbinden der glattzylindrischen Enden zweier Rohre

Die Erfindung bezieht sich auf eine Vorrichtung zum abgedichteten Verbinden der glattzylindrischen Enden zweier Rohre mit einer durch ein Schellenband aus vorzugsweise Edelstahl kontraktierbaren Dichtmanschette, wobei das Schellenband an seinen beiden Enden mit Stegbolzen verbunden ist, die zum Spannen des Schellenbandes durch wenigstens eine Schraube gegeneinander bewegbar sind.

Bei einer bekannten Vorrichtung der obigen Bauart sind die Stegbolzen durch die hakenförmig gebogenen Ränder von Laschen gehalten, die ihrerseits mit dem Schellenband verschweißt sind. Diese Art der Halterung der Stegbolzen hat den Nachteil, daß für das Schellenband eine hochwertige Stahlqualität verwendet werden muß, welche ohne Schaden im Sinne einer interkristallinen Korrosion zu erleiden einer Wärmebehandlung durch den Schweißvorgang standhält. Abgesehen davon stellen die Haltelaschen für die Stegbolzen zusätzliche Teile dar, die extra angefertigt und in einem zusätzlichen Arbeitsgang befestigt werden müssen.

Der Erfindung liegt die Aufgabe zugrunde, die Stegbolzen an den Enden des Schellenbandes unter Meidung eines Schweißvorganges einfach und ohne zusätzliche Teile zu befestigen.

Gemäß der Erfindung wird diese Aufgabe dadurch gelöst, daß die Enden des Schellenbandes gegen dieses zurück und in mehr als einer Lage um die Stegbolzen herumgewickelt und mit jeweils einem parallel zur Hauptachse der Vorrichtung und radial nach innen abgebogenen Endabschnitt in einem entsprechenden Längsschlitz in den Stegbolzen verankert sind. Die Enden des Schellenbandes werden also derart um die Stegbolzen herumgewickelt und an diesen so verankert, daß beim Anziehen der Spann-Schraube über die dadurch erzeugten Zugkräfte im Schellenband die Wicklungen bzw. Wickellagen an den Enden des Schellenbandes immer enger und fester gezogen werden. Durch Reibschluß entsteht so eine feste Verbindung zwischen den Stegbolzen und den Enden des Schellenbandes. Diese Verbindungsart ist einfach und erfordert keine zusätzlichen Teile wie z.B. Haltelaschen oder dgl. sowie vor allem auch keine Wärmebehandlung des Materials. Dadurch kann im Vergleich zu dem eingangs erläuterten Stand der Technik eine preiswertere Edelstahlqualität verwendet werden. Ein weiterer Vorteil der Erfindung besteht darin, daß beim Anziehen der Spann-Schraube die dadurch erzeugten Zugkräfte über die Stegbolzen gleichmäßig auf die gesamte Breite des Schellenbandes übertragen werden. Die erfindungsgemäße Vorrichtung zum abgedichteten Verbinden der glattzylindrischen Enden zweier Rohre wird fabrikmäßig vorgefertigt als sogenannter Steckverbinder auf die Baustelle geliefert.

Versuche haben gezeigt, daß eine einwandfreie Fixierung der Stegbolzen an den Enden des Schellenbandes schon erreicht wird, wenn die Stegbolzen von etwa 1 1/2 Wickellagen des Schellenbandes umfaßt werden.

Wenn nach einer weiteren Ausgestaltung der Erfindung die radial nach innen abgebogenen Endabschnitte des Schellenbandes in den Längsschlitzen der Stegbolzen klemmend angeordnet sind, wird der Wickelvorgang erleichtert.

Bei noch einer anderen Ausgestaltung der Erfindung ist vorgesehen, daß die beiden eingerollten Enden des Schel-

- 3 -

0184743

lenbandes mit auf die Spann-Schraube ausgefluchteten
Schlitzen versehen sind, deren Breite mindestens dem Durchmesser des Schaftes der Spann-Schraube entspricht. Diese
Schlitze erleichtern beim Zusammenbau des "Steckverbinders" die Einführung bzw. das Eindrehen der Spann-Schraube in die Stegbolzen.

Die Erfindung wird anschließend anhand der Zeichnung
eines Ausführungsbeispiels erläutert. Es zeigen:

Fig. 1   eine Teil-Stirnansicht der erfindungsgemäßen Verbindungs-Vorrichtung, teilweise im Schnitt und
Fig. 2   eine Draufsicht der Vorrichtung der Fig. 1.

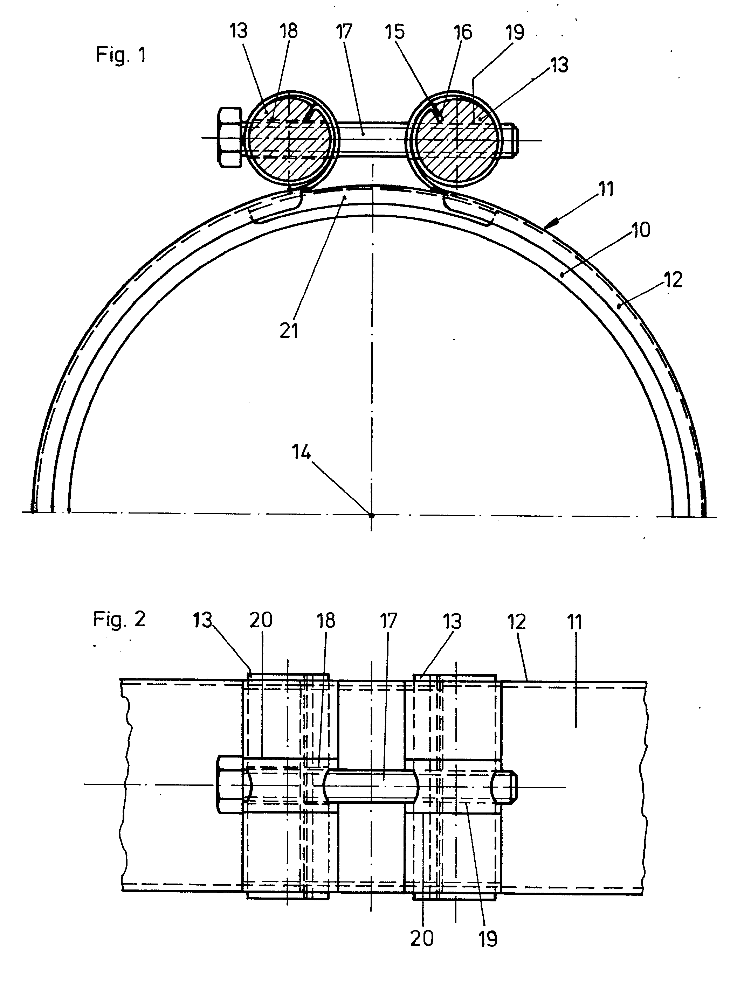

Die in den Figuren 1 und 2 abgebildete Vorrichtung dient
zur abgedichteten Verbindung der glattzylindrischen Enden
von zwei Rohren, welche z.B. Abwasserrohre aus Stahl oder
Gußeisen sein können und nicht gezeigt sind. Die Vorrichtung enthält zu diesem Zweck eine Dichtmanschette 10 aus
elastomerem Material und ein Schellenband 11 aus Edelstahl,
welches mit abgebogenen Rändern 12 die Dichtmanschette 10
seitlich teilweise übergreift.

Die beiden Enden des Schellenbandes 11 sind um je einen
Stegbolzen 13 in etwa 1 1/2 Lagen herumgewickelt. Ein parallel zur Längsachse 14 der Vorrichtung radial nach innen
abgebogener Endabschnitt 15 des Schellenbandes 11 ist in
einen Längsschlitz 16 in jedem Stegbolzen 13 klemmend eingesteckt. An dieser Stelle sei bemerkt, daß von den Teilen
des Schellenbandes 11, die um die Stegbolzen 13 herumgewickelt sind, die abgebogenen Ränder 12 entfernt sind.

Zum Spannen des Schellenbandes 11zwecks Kontraktierung
der Dichtmanschette 10 ist beim Ausführungsbeispiel eine
Spann-Schraube 17 vorgesehen. Je nach Breite des Schellenbandes bzw. der Dichtmanschette können auch mehrere solcher Spann-Schrauben vorgesehen sein. Die Spann-Schraube 17 erstreckt sich durch eine Durchgangsbohrung 18 im linken Stegbolzen 13 (Fig. 1) und ist in eine Gewindebohrung 19 im rechten Stegbolzen 13 eingedreht. Die um die Stegbolzen 13 herumgewickelten Lagen des Schellenbandes 11 sind mit auf die Spann-Schraube 17 ausgefluchteten Schlitzen 20 versehen, deren Breite beim Ausführungsbeispiel etwas größer als der Durchmesser des Schaftes der Spann-Schraube 17 ist und deren Höhe dem Durchmesser der Stegbolzen 13 entspricht. Diese Schlitze 20 erleichtern den Einbau der Spann-Schraube 17.

Der Spalt zwischen den eingerollten Enden des Schellenbandes 11 wird durch eine Zunge 21 überbrückt, deren Querschnitt demjenigen des Schellenbandes 11 angepaßt ist und die entweder lose eingelegt, am Schellenband 11 mit einem Ende eingehakt oder mit dem Schellenband 11 an einem Ende oder der Dichtmanschette 10 durch Klebung verbunden sein kann.

Zum abgedichteten Verbinden der glattzylindrischen Enden der zwei nicht gezeigten Rohre werden diese in die Dichtmanschette 10 eingesteckt und dann wird die Spann-Schraube 17 angezogen. Dabei werden die um die Stegbolzen 13 herumgewickelten Lagen des Schellenbandes 11 immer enger bzw. fester um die Stegbolzen 13 gezogen und es wird durch Reibschluß eine feste Verbindung zwischen jedem Stegbolzen 13 und den Schellenband-Enden hergestellt. Beim weiteren Anziehen der Spann-Schraube 17 werden die Stegbolzen 13 gegeneinander bewegt und es wird dadurch das Schellenband 11 gespannt, welches wiederum die Dichtmanschette 10 kontraktiert und gegen den Außenumfang der eingesteckten Rohr-Enden preßt.

Patentansprüche

1. Vorrichtung zum abgedichteten Verbinden der glattzylindrischen Enden zweier Rohre mit einer durch ein Schellenband aus vorzugsweise Edelstahl kontraktierbaren Dichtmanschette, wobei das Schellenband an seinen beiden Enden mit Stegbolzen verbunden ist, die zum Spannen des Schellenbandes durch wenigstens eine Schraube gegeneinander bewegbar sind, dadurch gekennzeichnet, daß die Enden des Schellenbandes (11) gegen dieses zurück und in mehr als einer Lage um die Stegbolzen (13) herumgewickelt und mit jeweils einem parallel zur Hauptachse (14) der Vorrichtung und radial nach innen abgebogenen Endabschnitt (15) in einem entsprechenden Längsschlitz (16) in den Stegbolzen (13) verankert sind.

2. Vorrichtung nach Anspruch 1, dadurch gekennzeichnet, daß die Stegbolzen (13) von etwa 1 1/2 Wickellagen des Schellenbandes (11) umfaßt werden.

3. Vorrichtung nach Anspruch 1 oder 2, dadurch gekennzeichnet, daß die radial nach innen abgebogenen Endabschnitte (15) des Schellenbandes (11) in den Längsschlitzen (16) der Stegbolzen (13) klemmend angeordnet sind.

4. Vorrichtung nach einem der Ansprüche 1 - 3, dadurch gekennzeichnet, daß die beiden eingerollten Enden des Schellenbandes (11) mit auf die Spann-Schraube (17) ausgefluchteten Schlitzen (20) versehen sind, deren Breite mindestens dem Durchmesser des Schaftes der Spann-Schraube (17) entspricht.

Fig. 1

Fig. 2

0184743

1/1